# FASCICULE DE BREVET EUROPEEN

(11) **EP 3 248 868 B1**
(45) Date de publication et mention de la délivrance du brevet: **31.03.2021**
(21) Numéro de dépôt: 17173017.9
(22) Date de dépôt: 26.05.2017
(51) Int. Cl.: B64C 13/04, B64C 13/10, G05G 5/05, G05G 5/03, G05G 9/047, G05G 1/04

(54) **MÉCANISME DE RETOUR D'EFFORT POUR UN MINIMANCHE DE PILOTAGE D'UN AÉRONEF, AINSI QUE DISPOSITIF DE PILOTAGE D'UN AÉRONEF, COMPORTANT UN TEL MÉCANISME**
KRAFTRÜCKFÜHRUNGSMECHANISMUS FÜR EINEN STEUER-SIDESTICK EINES LUFTFAHRZEUGS, SOWIE STEUERVORRICHTUNG EINES LUFTFAHRZEUGS, DIE EINEN SOLCHEN MECHANISMUS UMFASST
FORCE FEEDBACK MECHANISM FOR AN AIRCRAFT CONTROL MINI-STICK AND AIRCRAFT CONTROL DEVICE HAVING SUCH A MECHANISM

(30) Priorité: 27.05.2016 FR 1654807
(43) Date de publication de la demande: 29.11.2017
(73) Titulaire: LORD Solutions France, 26600 Pont-de-l'Isère (FR)
(72) Inventeur: FAUCON, Roch, 38550 LE PEAGE DE ROUSSILLON (FR); PONSONNET, Rémi, 26240 BEAUSEMBLANT (FR); ROUSSEY, Bastien, 26600 TAIN L'HERMITAGE (FR)
(74) Mandataire: Delorme, Nicolas

(56) Documents cités:
- WO-A1-2008/017344
- US-A- 2 756 610
- US-A- 3 870 161
- US-A- 5 412 299

## Description

La présente invention concerne un mécanisme de retour d'effort pour un minimanche de pilotage d'un aéronef. Elle concerne également un dispositif de pilotage d'un aéronef, comportant un tel mécanisme de retour d'effort.

Dans un aéronef à commandes de vol électriques, le pilotage est typiquement assuré à l'aide d'un minimanche qui n'est pas directement lié mécaniquement aux parties mobiles de l'aéronef, soumises aux efforts aérodynamiques : cette liaison est assurée par une chaîne de contrôle électronique, incluant, entre autres, un calculateur qui, à partir de signaux provenant de capteurs de position du minimanche, commande des actionneurs d'entrainement des parties mobiles précitées de l'aéronef. Comme il n'y a pas d'interaction mécanique directe ente le minimanche de pilotage et les parties mobiles de l'aéronef, ces dernières ne produisent pas sur le minimanche des retours d'effort, autrement appelés efforts résistants ou efforts de contre-réaction.

Or le pilotage d'un aéronef ne peut pas se faire de manière satisfaisante sans retour d'informations de ce type, vers le pilote, au niveau du minimanche. Pour qu'une résistance s'oppose au déplacement du minimanche entrainé par le pilote, il est connu d'équiper ces dispositifs de pilotage avec un système de retour d'effort, qui simule un effort de résistance sur le minimanche. Cet effort de résistance dépend de la position du minimanche : on définit ainsi une loi d'effort qui associe à toute position du minimanche une intensité et un sens de l'effort de résistance.

Un tel système de retour d'effort peut être à commande électronique, comme proposé dans US 5 412 299.

Une autre possibilité, plus sécure, est que ce système de retour d'effort soit intégralement mécanique. On parle alors de mécanismes de retour d'effort, auxquels s'intéresse la présente invention.

Classiquement, un tel mécanisme de retour d'effort comprend un ou plusieurs ressorts qui travaillent, par rapport à un bâti fixe, lors du déplacement du minimanche de pilotage.

Lorsqu'un seul ressort est prévu, on comprend que le retour d'effort est proportionnel à la contrainte mécanique du ressort : la loi d'effort est alors typiquement linéaire.

Lorsqu'on a besoin que l'effort de résistance fasse un saut brusque en un point du déplacement du minimanche distinct du point d'équilibre associé à la position « zéro » du minimanche, la loi d'effort doit inclure un saut d'effort, c'est-à-dire présenter une discontinuité de l'intensité de l'effort de résistance sans changement de sens de cet effort de résistance. Pour ce faire, il est connu de faire travailler deux systèmes mécaniques en parallèle. Le premier système, qui est fonctionnel sur toute la course de déplacement du minimanche, est mis en charge par un ressort correspondant et fournit un premier retour d'effort, basé sur une loi linéaire ou variable avec pente douce. Le second système entre en fonctionnement à un moment prédéterminé lors du déplacement du minimanche, grâce à un jeu dans le mécanisme : lorsque le déplacement du minimanche est tel que le jeu précité est compensé, un ressort du second système produit un effort supplémentaire, venant s'ajouter à la loi de base, fournie par le premier système. En prévoyant que le ressort du second système est initialement préchargé, on comprend que sa contribution crée un saut dans la loi d'effort. Puis, une fois que ce saut d'effort est passé, les contributions respectives des deux systèmes s'additionnent sur la fin de la course de déplacement du minimanche de pilotage. Ces mécanismes de retour d'effort, qui intègrent des jeux de fonctionnement et sur lesquels est basé le préambule de la revendication 1, posent cependant des problèmes de réglage initial, ainsi que des problèmes de dérive dans le temps du fait que leurs pièces soumises au jeu précité s'usent, typiquement par frottement et/ou par matage.

Dans un domaine différent de celui du pilotage d'un aéronef, WO 2008/017344 divulgue un joystick pour un système de chargement de fret. Ce joystick comporte un manche, qui est monté à rotation autour d'un axe fixe et dont une extrémité délimite une surface profilée en V. Un galet, qui roule sur cette surface profilée en V, est pressé contre cette dernière par un levier basculant dont les mouvements sont contraints par des ressorts de sorte que, lorsque l'utilisateur cesse de solliciter le manche après l'avoir écarté d'une position neutre dans laquelle le galet est dans le fond du profil en V précité, les ressorts agissent, par rappel élastique, sur le levier qui ramène alors le galet jusqu'au fond du profil en V et, par là, entraîne le manche jusqu'à sa position neutre précitée. Le manche est ainsi associé à un mécanisme de rappel automatique en positon neutre, mais n'est pas associé à un mécanisme de retour d'effort au sens défini plus haut, ce qui est d'ailleurs cohérent avec le domaine technique concerné par WO 2008/017344.

Le but de la présente invention est de proposer, en vue d'équiper un minimanche de pilotage d'un aéronef, un mécanisme de retour d'effort à la loi d'effort avec saut(s), qui soit plus précis, plus fiable, plus sûr, plus compact, et significativement moins couteux.

A cet effet, l'invention a pour objet un mécanisme de retour d'effort pour un minimanche de pilotage d'un aéronef, tel que défini à la revendication 1.

Une des idées à la base de l'invention est de profiler, en fonction de la loi d'effort que l'on souhaite appliquer au minimanche de pilotage et qui inclut un ou plusieurs sauts d'effort, une pièce liée en rotation au minimanche, autrement dit une came, intégrée aux moyens de transmission de mouvement entre le minimanche et un unique ressort associé. En pratique, un galet suiveur est avantageusement prévu pour, à la fois, être plaqué, par l'unique ressort associé, contre la surface profilée de la came et rouler, contre cette surface profilée lors du déplacement de la came entrainée en rotation par le minimanche de pilotage. Contrairement aux préjugés du domaine, la conformation précise de la surface profilée de la came, suivie par le galet lors du roulement de ce dernier, permet de fournir la loi d'effort souhaitée, en y incluant un ou plusieurs sauts d'effort. La surface profilée de la came présente avantageusement un profil continu pour le roulement du galet, évitant toute dérive mécanique qui serait liée à des interruptions de contact ou des frottements non-roulants entre le galet et la came. Dans tous les cas, le mécanisme de retour d'effort conforme à l'invention est ainsi précis et fiable, notamment dans le temps. De plus, les pièces constitutives de ce mécanisme de retour d'effort sont en nombre limité et leur assemblage nécessite peu de réglages, ce qui fait que le mécanisme conforme à l'invention est compact et économique.

Des caractéristiques additionnelles avantageuses du mécanisme de retour d'effort conforme à l'invention sont spécifiées aux revendications dépendantes.

L'invention a également pour objet un dispositif de pilotage d'un aéronef, tel que défini à la revendication 9.

L'invention sera mieux comprise à la lecture de la description qui va suivre, donnée uniquement à titre d'exemple et faite en se référant aux dessins sur lesquels :
- la figure 1 est une vue en perspective d'un mécanisme de retour d'effort conforme à l'invention ;
- la figure 2 est une vue en élévation, selon la flèche II de la figure 1, d'une partie du mécanisme de retour d'effort de la figure 1 ;
- la figure 3 est une vue similaire à la figure 2, montrant le mécanisme de retour d'effort dans une configuration de fonctionnement différente de celle montrée sur les figures 1 et 2 ;
- la figure 4 est une vue à plus grande échelle d'une partie seulement d'une pièce du mécanisme de retour d'effort des figures 1 à 3 ; et
- la figure 5 est un graphique d'une loi d'effort associée à la partie de la pièce, montrée sur la figure 4.

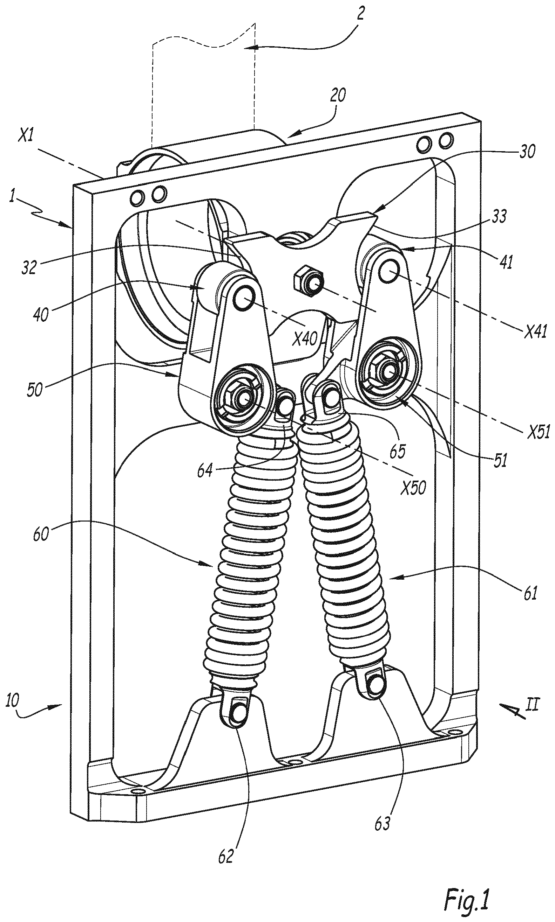

Sur les figures 1 à 4 est représenté un mécanisme de retour d'effort 1 pour un minimanche 2 de pilotage d'un aéronef. Le minimanche de pilotage 2 n'apparait que sur la figure 1, et ce de manière partielle et schématique, en pointillés.

Le mécanisme de retour d'effort 1 comprend un bâti fixe 10 qui, au sein de l'aéronef à piloter par le minimanche 2, est conçu pour être solidarisés à un châssis de cet aéronef. La forme de réalisation du bâti 10, ainsi que les détails de sa solidarisation au châssis de l'aéronef ne sont pas limitatifs de la présente invention et ne seront donc pas décrits ici davantage.

Le mécanisme de retour d'effort 1 comprend également une pièce 20 mobile par rapport au bâti 10, cette pièce 20 étant liée au minimanche de pilotage 2 en rotation autour d'un axe de rotation X1 défini par rapport au bâti 10. Dans l'exemple de réalisation considéré sur les figures, cette pièce rotative 20 est agencée sur le côté du bâti 10, tourné à l'opposé du lecteur sur les figures 1 à 3. En pratique, la forme de réalisation de cette pièce rotative 20 n'est pas limitative de l'invention du moment que le minimanche 2 et cette pièce 20 soient liés l'un à l'autre en rotation autour de l'axe X1, la mise en rotation du minimanche 2 autour de l'axe X1 entrainant une mise en rotation correspondante de la pièce 20, et inversement. A titre d'exemple de réalisation, la pièce rotative 20 est portée par le bâti 10 avec interposition d'un palier ou d'un roulement.

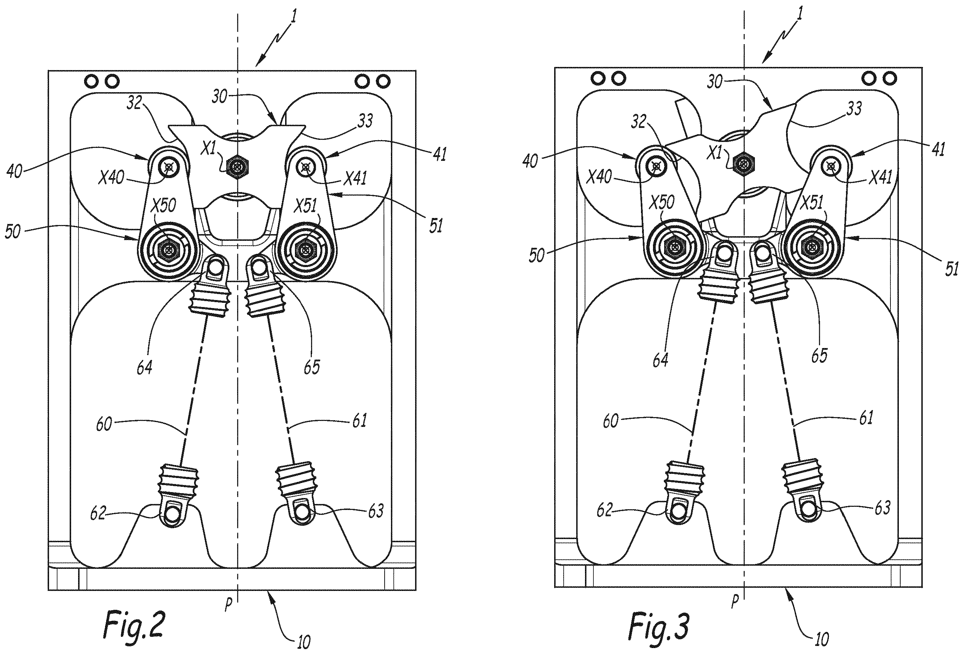

Le mécanisme de retour d'effort 1 comprend en outre une came 30 qui est liée au minimanche de pilotage 2 en rotation autour de l'axe X1. Dans l'exemple de réalisation considéré sur les figures, cette came 30 est agencée sur le côté du bâti 10, tourné vers le lecteur sur les figures 1 à 3. A titre d'exemple de réalisation, la came 30 est solidarisée fixement à la pièce rotative 20. Quelle que soit la forme de réalisation de la came 30, la mise en rotation du minimanche de pilotage 2 autour de l'axe X1 entraine une mise en rotation correspondante de la came 30, ici par l'intermédiaire de la pièce rotative 20, et inversement, comme montré par comparaison des figures 2 et 3.

Comme bien visible sur les figures 1 à 3, la came 30 est pourvue, de part et d'autre de l'axe X1, de surfaces latérales 32 et 33, qui sont opposées l'une à l'autre et qui, dans l'exemple de réalisation considéré sur les figures, sont chacune tournées à l'opposé de l'axe X1. Les profils respectifs de ces surfaces 32 et 33 seront décrits plus en détail par la suite, étant d'ores et déjà remarqué que, dans l'exemple de réalisation considéré ici, les surfaces 32 et 33 sont symétriques l'une de l'autre par rapport à un plan géométrique médian P, défini par le bâti 10 et contenant l'axe X1.

Le mécanisme de retour d'effort 1 comprend en outre deux galets 40 et 41, qui sont identiques l'un à l'autre et qui sont agencés de part et d'autre et à distance de l'axe X1. Le galet 40, 41 est conçu pour rouler librement, autour de son axe central X40, X41, sur la surface 32, 33 de la came 30, en suivant le profil de cette surface 32, 33. Pour ce faire, les galets 40 et 41 sont respectivement portés par des supports de galet 50 et 51, sur chacun desquels le galet correspondant est monté en rotation libre autour de son axe X40, X41. Chaque support de galet 50, 51 est lui-même monté à rotation libre sur le bâti 10 autour d'un axe correspondant X50, X51, ces axes X50 et X51 étant définis par le bâti 10. Comme bien visible sur les figures 1 à 3, les axes X1, X40, X41, X50 et X51 sont distincts les uns des autres et s'étendent parallèlement les uns aux autres. Pour des raisons qui apparaitront plus loin, et qui sont liées à l'exemple de réalisation considéré sur les figures, les axes X40 et X41 sont symétriques l'un de l'autre par rapport à l'axe X1, tandis que les axes X50 et X51 sont symétriques l'un de l'autre par rapport au plan P.

Le mécanisme de retour d'effort 1 comprend également deux ressorts 60 et 61, le ressort 60 étant fonctionnellement associé au galet 40 et au support de galet correspondant 50, tandis que le ressort 61 est fonctionnellement associé au galet 41 et au support de galet correspondant 51. Les ressorts 60 et 61 sont agencés symétriquement l'un à l'autre par rapport au plan géométrique précité P : une extrémité 62, 63 du ressort 60, 61 est assemblée, notamment de manière articulée, au bâti 10, tandis que l'extrémité opposée 64, 65 du ressort 60, 61 est assemblée, notamment de manière articulée, au support de galet correspondant 50, 51. Au sein du mécanisme de retour d'effort 1, chacun des ressorts 60 et 61 est intégré en étant mis en charge, la contrainte correspondante du ressort étant transmise, par rapport au bâti fixe 10, au support de galet correspondant 50, 51 de manière à presser le galet correspondant 40, 41 contre la surface associée 32, 33 de la came 30, l'effort de contact entre le galet et la came étant dirigé vers l'axe X1. Dans l'exemple de réalisation considéré sur les figures, on comprend que l'effort total en résultant sur la came 30 est constitué de deux contributions, respectivement associées au ressort 60, via le support de galet 50 et le galet 40, et au ressort 61, via le support de galet 51 et le galet 41 : du fait de la symétrie de cette forme de réalisation, chacune des contributions précitées correspond respectivement à environ la moitié de la résultante totale appliquée à la came 30. En d'autres termes, on comprend que dans la forme de réalisation considérée sur les figures, les contributions d'effort, associées respectivement aux ressorts 60 et 61, sont, en quelque sorte, redondantes en permettant un fonctionnement selon un mode dégradé, dans le sens où, à titre de variante non représentée et non revendiquée, un seul des deux ressorts 60 et 61, associé au support de galet et au galet correspondants, est suffisant pour assurer une chaine d'effort variable entre la came 30 et le bâti 10 à un niveau d'effort moindre.

A titre d'option avantageuse, visant notamment à faciliter le montage initial de cette forme de réalisation, au moins l'un des supports de galet 50 et 51 est porté par le bâti 10, par l'intermédiaire d'un excentrique, non visible sur les figures et qui permet d'ajuster finement la position de l'axe correspondant X50, X51 par rapport au bâti 10, en évitant ainsi une éventuelle hyperstaticité du mécanisme de retour d'effort 1.

Plus généralement, quels que soient les détails de la forme de réalisation du mécanisme de retour d'effort 1, on comprend que chaque ressort 60, 61 s'oppose au déplacement rotatif autour de l'axe X1 de la came 30 et donc du minimanche de pilotage 2, par rapport au bâti fixe 10 : en effet, les mouvements rotatifs du minimanche 2 autour de l'axe X1 sont transmis au ressort 60, respectivement au ressort 61, par successivement la came 30, le galet 40, respectivement le galet 41, et le support de galet 50, respectivement le support de galet 51, moyennant, à la fois, le roulement du galet 40, respectivement du galet 41, autour de son axe X40, X41 sur la surface 32, respectivement 33, de la came 30, et le libre basculement du support de galet 50, respectivement du support de galet 51, autour de l'axe correspondant X50, X51, par rapport au bâti 10, comme montré par comparaison des figures 2 et 3. Bien entendu, la transmission de mouvement qui vient d'être décrite est réversible entre chacun des ressorts 60 et 61 et le minimanche de pilotage 2. Ainsi, la pièce rotative 20, la came 30, les galets 40 et 41 et les supports de galet 50 et 51 appartiennent à des moyens mécaniques de transmission de mouvement, en formant conjointement un sous-mécanisme du mécanisme de retour d'effort 1, qui permettent de transmettre les mouvements rotatifs autour de l'axe X1 entre le minimanche 2 et les ressorts 60 et 61.

En pratique, dans le prolongement des considérations développées dans la partie introductive du présent document, on comprend qu'aucune information de pilotage dans le sens « pilote vers aéronef » n'est transmise, depuis le minimanche de pilotage 2, via le mécanisme de retour d'effort 1.

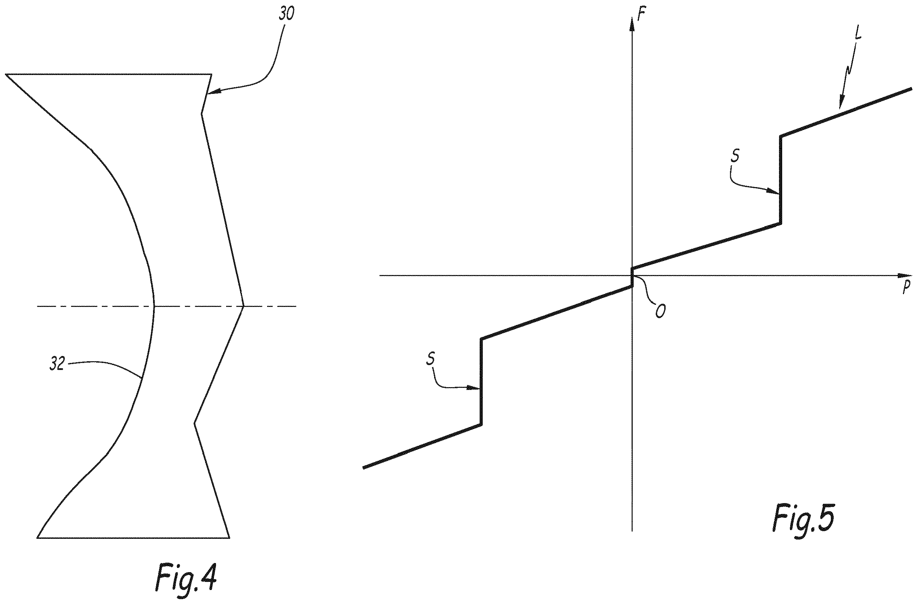

La résistance relative qu'opposent les ressorts 60 et 61 au déplacement rotatif, autour de l'axe X1 du minimanche de pilotage 2, via les moyens de transmission précités, est réalisée selon une loi d'effort prédéterminée, qui associe à toute position rotative du minimanche un effort de résistance. Cette loi d'effort, qui est déterminée à la conception du mécanisme de retour d'effort 1 et dont un exemple, référencé L, est donné à la figure 5 montrant, de manière schématique, la variation de l'effort de résistance F en fonction de la position angulaire P, autour de l'axe X1, du minimanche de pilotage 2, conditionne la conformation des surfaces 32 et 33 de la came 30, plus précisément des profilés respectifs de ces surfaces 32 et 33, contre lesquels roulent les galets suiveurs 40 et 41. Ainsi, par application de la loi d'effort L, l'intensité et le sens de l'effort de résistance sur le minimanche de pilotage 2, produit par chacun des ressorts 60 et 61, sont modulés en fonction de la position de roulement du galet correspondant 40 ou 41 sur le profil de la surface correspondante 32 ou 33 de la came 30, étant rappelé que cette dernière est liée en rotation au minimanche 2, autour de l'axe X1.

Avantageusement, ce profilé de chaque surface 32, 33 est continu pour le roulement du galet correspondant 40, 41, dans le sens où sur toute la course de roulement du galet 40, 41 sur la surface correspondante 32, 33 de la came 3, le galet est maintenu constamment au contact de cette surface en au moins une zone de contact effectif, excluant ainsi tout jeu de contact entre les galets et la came ou tout décollement entre les galets et la came.

Selon l'invention, la loi d'effort L, en fonction de laquelle les surfaces 32 et 33 de la came 30 sont profilées, inclut un ou plusieurs sauts d'effort, c'est-à-dire une ou plusieurs discontinuités de l'intensité de l'effort de résistance F sans changement de sens de cet effort de résistance F, comme pour l'exemple des sauts qui sont référencés S sur la figure 5. On notera que les sauts d'effort S dont il est question sont différents de la discontinuité qui est confondue avec l'axe vertical sur la figure 5 : la discontinuité dernièrement citée correspond à une précharge du mécanisme de retour d'effort 1, induisant une valeur non nulle pour l'intensité de l'effort de résistance F au niveau d'un point d'équilibre du mécanisme de retour d'effort, ce point d'équilibre étant associé à la fois à une position zéro du minimanche 2, référencée O sur la figure 5, et à un changement de sens de l'effort de résistance F de part et d'autre de cette position zéro. Ainsi, les surfaces profilées 32 et 33 sont conformées pour définir la loi d'effort L avec à la fois sa discontinuité du point d'équilibre et ses sauts d'effort S, tout en conservant avantageusement un profil continu, comme illustré à la figure 4, qui montre le profil de la surface 32 de la came 30, associé à la loi d'effort F de la figure 5.

L'utilisation de la came 30 et de ses surfaces 32 et 33 profilées en fonction de la loi d'effort L permet ainsi, au niveau de chaque saut d'effort S, d'obtenir, avantageusement de façon continue, une variation discontinue et sans changement de sens, de l'effort de résistance F à l'interface de roulement entre ces surfaces et les galets correspondants 40 et 41, pour un très faible écart de la position angulaire P autour de l'axe X1. Pour chacune des surfaces profilées 32 et 33, cette variation de l'effort de résistance ne fait travailler qu'un unique ressort, à savoir le ressort correspondant 60, respectivement 61, de manière continue, sur tout le domaine d'application de la loi d'effort L, y compris lors du ou des sauts d'effort S de cette loi d'effort.

En pratique, les spécificités de la loi d'effort L ne sont pas limitatives de l'invention. Ainsi, à titre de variante non représentée, la loi d'effort peut être dépourvue de discontinuité au niveau du point d'équilibre du mécanisme de retour d'effort. De même, la loi d'effort peut être linéaire ou non linéaire.

Divers aménagements et variantes au mécanisme de retour d'effort 1 décrit jusqu'ici sont par ailleurs envisageables mais elles ne font pas partie de la présente invention
- comme expliqué plus haut, un seul des deux ressorts 60 et 61, associé au galet correspondant 40 ou 41 et au support de galet correspondant 50 ou 51, est suffisant pour disposer d'un mécanisme de retour d'effort, fonctionnel et efficace ;
- moyennant l'aménagement des interfaces et de la géométrie des pièces, le ou chacun des ressorts 60 et 61 peut indifféremment être un ressort de tension, un ressort de compression ou un ressort de torsion ;
- plutôt que d'être tournée à l'opposé de l'axe X1, la ou chacune des surfaces profilées 32 et 33 de la came 30 peut être tournée vers l'axe de rotation X1, le galet correspondant 40 ou 41 étant alors pressé, sous l'action du ressort correspondant, contre cette surface profilée avec un effort presseur s'éloignant de l'axe X1 ; et/ou
- l'utilisation, expliquée plus haut, des surfaces profilées 32 et 33 de la came 30 peut n'être prévue que pour une partie seulement de la loi d'effort appliquée par les moyens de transmission du mécanisme de retour d'effort 1, cette partie incluant un ou plusieurs sauts d'effort tels que les sauts S décrits précédemment ; dans ce cas, le reste de la loi d'effort est défini par d'autres aménagements, connus dans la technique, intégrés aux moyens de transmission.

## Revendications

1. Mécanisme de retour d'effort (1) pour un minimanche (2) de pilotage d'un aéronef, ce mécanisme comportant :
- un bâti fixe (10) qui est destiné à être solidarisé à un châssis de l'aéronef, deux ressorts (60, 61) qui s'opposent au déplacement du minimanche (2) par rapport au bâti (10), et
- des moyens mécaniques de transmission de mouvement (20, 30, 40, 41, 50, 51), qui sont portés par le bâti (10) de manière mobile et qui sont adaptés pour transmettre un mouvement de rotation, autour d'un premier axe de rotation (X1), entre le minimanche (2) et lesdits ressorts (60, 61), en appliquant une loi d'effort (L) selon laquelle l'effort de résistance (F), qu'oppose lesdits ressorts, via les moyens de transmission, au déplacement rotatif du minimanche autour du premier axe de rotation, est dépendant de la position angulaire (P) du minimanche autour du premier axe de rotation, cette loi d'effort comprenant au moins une partie incluant au moins un saut d'effort (S) qui correspond à une discontinuité de l'intensité de l'effort de résistance sans changement de sens de cet effort de résistance,
les moyens de transmission (20, 30, 40, 41, 50, 51) comprenant une came (30), qui est adaptée pour être liée au minimanche (2) en rotation autour du premier axe de rotation (X1) et qui est pourvue de d'au deux surfaces profilées (32, 33) qui sont conformées de manière à définir ladite au moins une partie de la loi d'effort (L), les deux surfaces profilées (32 et 33) étant respectivement associées auxdits deux ressorts (60, 61), lesdites surfaces profilées (32, 33) étant symétriques l'une de l'autre et lesdits deux ressorts (60, 61) étant agencés symétriquement l'un de l'autre par rapport à un plan géométrique médian (P), défini par le bâti (10) et contenant le premier axe de rotation (X1).

2. Mécanisme suivant la revendication 1, **caractérisé en ce que** lesdites deux surfaces profilées (32, 33) présentent un profil continu pour le roulement respectif d'un galet suiveur (40, 41), qui appartient aux moyens de transmission et qui est plaqué contre lesdites au deux surfaces profilées par lesdits au deux ressorts (60, 61).

3. Mécanisme suivant l'une quelconque des revendications précédentes, **caractérisé en ce que** lesdites deux surfaces profilées (32, 33) sont tournées à l'opposé du premier axe de rotation (X1).

4. Mécanisme suivant l'une quelconque des revendications 1 ou 2, **caractérisé en ce que** lesdites deux surfaces profilées sont tournées vers le premier axe de rotation.

5. Mécanisme suivant l'une quelconque des revendications précédentes, **caractérisé en ce que** les moyens de transmission comprennent en outre, pour chacun des deux ressorts (60, 61), un support de galet (50, 51), qui est monté en rotation libre sur le bâti (10) autour d'un second axe de rotation (X50, X51) et sur lequel un galet (40, 41) est monté à rotation libre autour d'un troisième axe de rotation (X40, X41) pour rouler contre la surface profilée (32, 33) qui est associée au ressort, les deuxième et troisième axes de rotation étant distincts et sensiblement parallèles au premier axe de rotation (X1),
et **en ce que** des extrémités opposées (62, 63, 64, 65) de chaque ressort (60, 61) sont respectivement assemblées au bâti (10) et au support de galet correspondant (50, 51) de manière à, à la fois, contraindre le ressort et presser le galet correspondant (40, 41) contre la surface profilée (32, 33) associée au ressort.

6. Mécanisme suivant la revendication 5, **caractérisé en ce qu'**au moins l'un des deux supports de galet (50 et 51), respectivement associés aux deux ressorts (60 et 61), est monté en rotation libre sur le bâti (10) autour du second axe de rotation correspondant (X50, X51) par l'intermédiaire d'un excentrique.

7. Mécanisme suivant l'une quelconque des revendications 5 ou 6, **caractérisé en ce que** les extrémités opposées (62, 63, 64, 65) de chaque ressort (60, 61) sont respectivement articulées sur le bâti (10) et sur le support de galet correspondant (50, 51).

8. Mécanisme suivant l'une quelconque des revendications précédentes, **caractérisé en ce que** lesdits au deux ressorts (60, 61) sont choisis parmi un ressort de tension, un ressort de compression et un ressort de torsion.

9. Dispositif de pilotage d'un aéronef, ce dispositif comportant :
- un minimanche (2) de pilotage de l'aéronef, et
- un mécanisme de retour d'effort (1), qui est conforme à l'une quelconque des revendications précédentes, dont le bâti (10) est solidarisé à un châssis de l'aéronef, et dont la came (30) est liée au minimanche en rotation autour du premier axe de rotation (X1).

## Patentansprüche

1. Kraftrückführungsmechanismus (1) für einen Steuer-Sidestick (2) eines Luftfahrzeugs, wobei dieser Mechanismus umfasst:
- ein festsitzendes Gestell (10), das dazu bestimmt ist, fest mit einem Rahmen des Luftfahrzeugs verbunden zu werden,
- zwei Federn (60, 61), die sich der Bewegung des Sidesticks (2) in Bezug auf das Gestell (10) entgegensetzen, und
- mechanische Mittel zur Bewegungsübertragung (20, 30, 40, 41, 50, 51), die von dem Gestell (10) in beweglicher Art getragen werden und die angepasst sind, um eine Drehbewegung um eine erste Drehachse (X1) zwischen dem Sidestick (2) und den Federn (60, 61) zu übertragen, indem ein Kraftgesetz (L) angewendet wird, gemäß welchem die Widerstandskraft (F), welche die Federn über die Übertragungsmittel der Drehbewegung des Sidesticks um die erste Drehachse entgegensetzen, unabhängig ist von der Winkelposition (P) des Sidesticks um die erste Drehachse, wobei dieses Kraftgesetz mindestens einen Teil umfasst, der mindestens einen Kraftsprung (S) einschließt, der einer Diskontinuität der Stärke der Widerstandskraft ohne Änderung der Richtung dieser Widerstandskraft entspricht,
wobei die Übertragungsmittel (20, 30, 40, 41, 50, 51) einen Nocken (30) umfassen, der angepasst ist, um mit dem Sidestick (2) in Drehung um die erste Drehachse (X1) verbunden zu werden, und der mit zwei Profiloberflächen (32, 33) versehen ist, die so ausgebildet sind, dass der mindestens eine Teil des Kraftgesetzes (L) definiert wird, wobei die zwei Profiloberflächen (32 und 33) jeweils den zwei Federn (60, 61) zugeordnet sind, wobei die Profiloberflächen (32, 33) zueinander symmetrisch sind und die zwei Federn (60, 61) symmetrisch zueinander in Bezug auf eine geometrische Mittelebene (P) angeordnet sind, die von dem Gestell (10) definiert wird und die erste Drehachse (X1) enthält.

2. Mechanismus nach Anspruch 1, **dadurch gekennzeichnet, dass** die zwei Profiloberflächen (32, 33) ein kontinuierliches Profil zum jeweiligen Rollen eines Nockenfolgers (40, 41) aufweisen, der zu den Übertragungsmitteln gehört und der gegen die zwei Profiloberflächen durch die zwei Federn (60, 61) gedrückt wird.

3. Mechanismus nach einem der vorstehenden Ansprüche, **dadurch gekennzeichnet, dass** die zwei Profiloberflächen (32, 33) der ersten Drehachse (X1) entgegengesetzt gedreht sind.

4. Mechanismus nach einem der Ansprüche 1 oder 2, **dadurch gekennzeichnet, dass** die zwei Profiloberflächen zu der ersten Drehachse hin gedreht sind.

5. Mechanismus nach einem der vorstehenden Ansprüche, **dadurch gekennzeichnet, dass** die Übertragungsmittel weiter für jede der zwei Federn (60, 61) einen Rollenhalter (50, 51) umfassen, der auf dem Gestell (10) frei drehend um eine zweite Drehachse (X50, X51) montiert ist und auf dem eine Rolle (40, 41) frei drehend um eine dritte Drehachse (X40, X41) montiert ist, um gegen die Profiloberfläche (32, 33), die der Feder zugeordnet ist, zu rollen, wobei die zweiten und dritten Drehachsen verschieden und im Wesentlichen parallel zu der ersten Drehachse (X1) sind,
und dadurch, dass entgegengesetzte Enden (62, 63, 64, 65) jeder Feder (60, 61) jeweils an dem Gestell (10) und an dem entsprechenden Rollenhalter (50, 51) befestigt sind, sodass gleichzeitig die Feder beansprucht und die entsprechende Rolle (40, 41) gegen die Profiloberfläche (32, 33), die der Feder zugeordnet ist, gedrückt wird.

6. Mechanismus nach Anspruch 5, **dadurch gekennzeichnet, dass** mindestens einer der zwei Rollenhalter (50 und 51), die jeweils den zwei Federn (60 und 61) zugeordnet sind, auf dem Gestell (10) frei drehend um die entsprechende zweite Drehachse (X50, X51) mittels eines Exzenters montiert ist.

7. Mechanismus nach einem der Ansprüche 5 oder 6, **dadurch gekennzeichnet, dass** die entgegengesetzten Enden (62, 63, 64, 65) jeder Feder (60, 61) jeweils auf dem Gestell (10) und auf dem entsprechenden Rollenhalter (50, 51) angelenkt sind.

8. Mechanismus nach einem der vorstehenden Ansprüche, **dadurch gekennzeichnet, dass** die zwei Federn (60, 61) ausgewählt sind aus einer Spannungsfeder, einer Druckfeder und einer Drehfeder.

9. Vorrichtung zur Steuerung eines Luftfahrzeugs, wobei diese Vorrichtung umfasst:
- einen Sidestick (2) zur Steuerung des Luftfahrzeugs und
- einen Kraftrückführungsmechanismus (1), der nach einem der vorstehenden Ansprüche ausgebildet ist, dessen Gestell (10) fest mit einem Rahmen des Luftfahrzeugs verbunden ist und dessen Nocken (30) mit dem Sidestick drehend um die erste Drehachse (X1) verbunden ist.

## Claims

1. A force-feedback mechanism (1) for a mini stick (2) for driving an aircraft, this mechanism including:
- a fixed mount (10) which is intended to be secured to a frame of the aircraft,
- two springs (60, 61) which are opposed to the displacement of the mini stick (2) relative to the mount (10), and
- mechanical movement transmission means (20, 30, 40, 41, 50, 51), which are carried by the mount (10) in a movable manner and which are adapted to transmit a rotational movement, about a first axis of rotation (X1), between the mini stick (2) and said springs (60, 61), by applying a force law (L) according to which the resistance force (F), opposed by said springs, via the transmission means, to the rotary displacement of the mini stick about the first axis of rotation, is dependent on the angular position (P) of the mini stick about the first axis of rotation, this force law comprising at least one portion including at least one force jump (S) which corresponds to a discontinuity in the intensity of the resistance force without changing the direction of this resistance force,
the transmission means (20, 30, 40, 41, 50, 51) comprising a cam (30), which is adapted to be linked to the mini stick (2) in rotation about the first axis of rotation (X1) and which is provided with two profiled surfaces (32, 33) which are shaped so as to define said at least one portion of the force law (L), the two profiled surfaces (32 and 33) being respectively associated to said two springs (60, 61), said profiled surfaces (32, 33) being symmetrical to each other and said two springs (60, 61) being arranged symmetrically to each other relative to a median geometrical plane (P), defined by the mount (10) and containing the first axis of rotation (X1).

2. The mechanism according to claim 1, **characterized in that** said two profiled surfaces (32, 33) have a continuous profile for the respective bearing of a follower roller (40, 41), which belongs to the transmission means and which is pressed against said two profiled surfaces by said two springs (60, 61).

3. The mechanism according to any one of the preceding claims, **characterized in that** said two profiled surfaces (32, 33) are facing away from the first axis of rotation (X1).

4. The mechanism according to any one of claims 1 or 2, **characterized in that** said two profiled surfaces are turned towards the first axis of rotation.

5. The mechanism according to any one of the preceding claims, **characterized in that** the transmission means further comprise, for each of the two springs (60, 61), a roller support (50, 51), which is mounted in free rotation on the mount (10) about a second axis of rotation (X50, X51) and on which a roller (40 , 41) is mounted to rotate freely about a third axis of rotation (X40, X41) to roll against the profiled surface (32, 33) which is associated with the spring, the second and third axes of rotation being distinct and substantially parallel to the first axis of rotation (X1),
and **in that** opposite ends (62, 63, 64, 65) of each spring (60, 61) are respectively assembled to the mount (10) and to the corresponding roller support (50, 51) so as to, at a time, bias the spring and press the corresponding roller (40, 41) against the profiled surface (32, 33) which is associated with the spring.

6. The mechanism according to claim 5, **characterized in that** at least one of the two roller supports (50 and 51), respectively associated with the two springs (60 and 61), is mounted in free rotation on the mount (10) about the second corresponding axis of rotation (X50, X51) via an eccentric.

7. The mechanism according to any one of claims 5 or 6, **characterized in that** the opposite ends (62, 63, 64, 65) of each spring (60, 61) are respectively hinged on the mount (10) and on the corresponding roller support (50, 51).

8. The mechanism according to any one of the preceding claims, **characterized in that** said two springs (60, 61) are selected from a tension spring, a compression spring and a torsion spring.

9. A device for driving an aircraft, this device including:
- a mini stick (2) for driving the aircraft, and
- a force-feedback mechanism (1), which is in accordance with any one of the preceding claims, whose mount (10) is secured to a frame of the aircraft, and whose cam (30) is linked to the mini stick in rotation about the first axis of rotation (X1).
